# FASCICULE DE BREVET EUROPEEN

(11) **EP 2 677 644 B1**
(45) Date de publication et mention de la délivrance du brevet: **10.08.2016**
(21) Numéro de dépôt: 13171965.0
(22) Date de dépôt: 14.06.2013
(51) Int. Cl.: H02M 1/12, H02M 5/458

(54) **SYSTÈME DE CONVERSION D'ÉNERGIE ÉLECTRIQUE COMPORTANT DEUX TRANSFORMATEURS ÉLECTRIQUES À DEUX ENROULEMENTS SECONDAIRES, ET CHAÎNE D'ENTRAÎNEMENT COMPRENANT UN TEL SYSTÈME DE CONVERSION**
STROMRICHTERSYSTEM, DAS ÜBER ZWEI ELEKTRISCHE TRANSFORMATOREN MIT ZWEI SEKUNDÄRWICKLUNGEN VERFÜGT, UND ANTRIEBSSTRANG, DER EIN SOLCHES SYSTEM AUFWEIST
ELECTRIC POWER CONVERSION SYSTEM COMPRISING TWO ELECTRIC TRANSFORMERS WITH TWO SECONDARY WINDINGS, AND DRIVE CHAIN COMPRISING SUCH A CONVERSION SYSTEM

(30) Priorité: 19.06.2012 FR 1255721
(43) Date de publication de la demande: 25.12.2013
(73) Titulaire: GE Energy Power Conversion Technology Ltd, Rugby Warwickshire CV21 1BU (GB)
(72) Inventeur: Permuy, Alfred, 92500 Rueil Malmaison (FR)
(74) Mandataire: Serjeants LLP

(56) Documents cités:
- EP-A1- 0 299 916
- CA-A1- 1 183 895
- GB-A- 2 167 582
- JP-A- 6 113 461
- Daniele Buzzini ET AL: "Essais concluants", ABB Revue 2011, 31 December 2011 (2011-12-31), pages 39-44, XP55227146, Retrieved from the Internet: URL:https://library.e.abb.com/public/f1cbc 2727286d45ec125797e0004c5fa/39-44 2m149_SPA_72dpi.pdf [retrieved on 2015-11-10]

## Description

La présente invention concerne un système de conversion d'énergie électrique comprenant :
- un premier transformateur électrique propre à être relié à un réseau électrique alternatif, le premier transformateur comportant un premier enroulement primaire et deux premiers enroulements secondaires, et
- deux convertisseurs électriques, chacun étant connecté à un premier enroulement secondaire respectif.

L'invention concerne également une chaîne d'entraînement comprenant une machine électrique alimentée par un réseau électrique alternatif via un tel système de conversion d'énergie électrique, le système de conversion étant connecté entre le réseau alternatif et la machine électrique.

On connaît de l'article intitulé « Essais concluants » publié dans la revue ABB de février 2011, un système de conversion du type précité. Le transformateur électrique connecté entre le réseau alternatif et les deux convertisseurs électriques, également appelés convertisseurs LCI, comporte un enroulement primaire et trois enroulements secondaires. Chacun des deux convertisseurs électriques est connecté à un enroulement secondaire respectif, et un filtre de réduction des harmoniques de courant est connecté au troisième enroulement secondaire. Chaque convertisseur électrique présente une puissance électrique comprise entre 10 MW et 20 MW.

Toutefois, un tel transformateur électrique à trois enroulements secondaires est particulièrement coûteux et difficile à réaliser, ce qui engendre un coût élevé du système de conversion.

Le but de l'invention est donc de proposer un système de conversion permettant de réduire les coûts, tout en offrant des performances électriques équivalentes.

A cet effet, l'invention a pour objet un système de conversion du type précité, dans lequel le système comprend en outre un deuxième transformateur électrique et un dispositif électrique auxiliaire, le deuxième transformateur comportant un deuxième enroulement primaire et deux deuxièmes enroulements secondaires, chaque deuxième enroulement secondaire étant connecté à un premier enroulement secondaire respectif, et le dispositif auxiliaire étant connecté au deuxième enroulement primaire.

Suivant d'autres aspects avantageux de l'invention, le système de conversion comprend une ou plusieurs des caractéristiques suivantes, prises isolément ou selon toutes les combinaisons techniquement possibles :
- le nombre d'enroulements secondaires des premier et deuxième transformateurs électriques est égal à 2 ;
- le dispositif auxiliaire comporte un filtre de réduction d'harmonique(s) de courant susceptibles d'être réinjectée(s) sur le réseau alternatif ;
- le réseau alternatif présente au moins une phase, et le filtre de réduction comporte, pour la ou chaque phase, une bobine électromagnétique connectée en série avec un condensateur ;
- chaque convertisseur est un convertisseur commuté par la charge ;
- chaque convertisseur commuté par la charge comporte un redresseur de tension et un onduleur de tension connecté en sortie du redresseur de tension via un bus continu, le bus continu comportant une bobine électromagnétique ;
- le redresseur de tension et l'onduleur de tension comportent chacun un pont de thyristors.

L'invention a également pour objet une chaîne d'entraînement comprenant une machine électrique alimentée par un réseau électrique alternatif via un système de conversion d'énergie électrique, le système de conversion étant connecté entre le réseau alternatif et la machine électrique, dans laquelle le système de conversion d'énergie électrique est tel que défini ci-dessus.

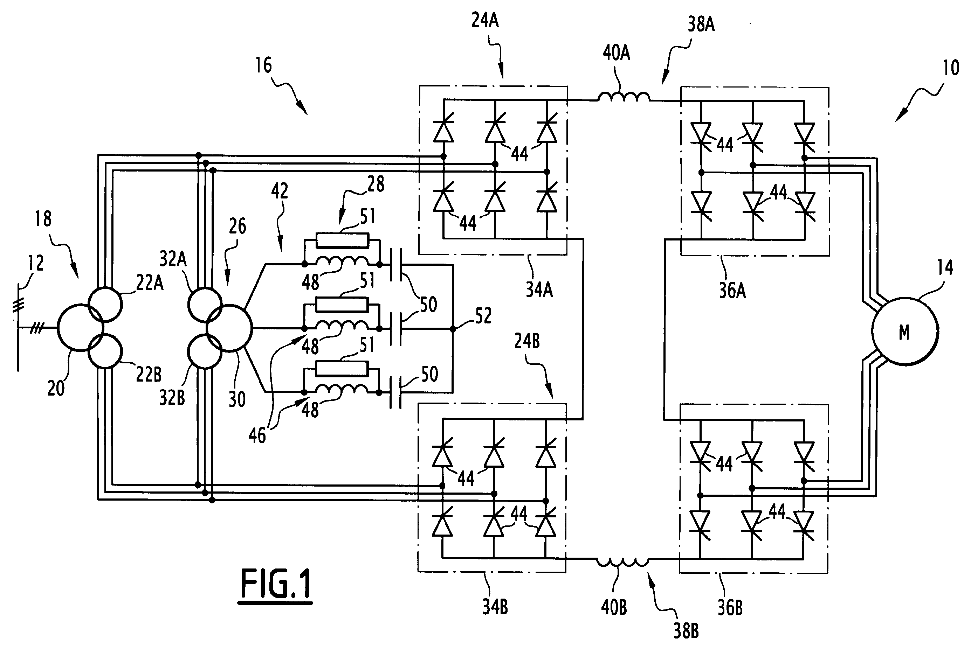

Ces caractéristiques et avantages de l'invention apparaîtront à la lecture de la description qui va suivre, donnée uniquement à titre d'exemple non limitatif, et faite en référence à la figure unique, également appelée figure 1, représentant un schéma électrique d'une chaîne d'entraînement selon l'invention.

Sur la figure 1, une chaîne d'entraînement 10, reliée à un réseau électrique alternatif 12, comprend une machine électrique 14 alimentée par le réseau alternatif 12 via un système de conversion d'énergie électrique 16, le système de conversion 16 étant connecté entre le réseau alternatif 12 et la machine électrique 14.

Le réseau électrique 12 présente au moins une phase. Le réseau alternatif 12 est, par exemple, un réseau triphasé.

La machine électrique 14 est, par exemple, un moteur synchrone. En variante, la machine 14 est un moteur asynchrone.

Le système de conversion 16 est propre à convertir une tension alternative d'entrée issue du réseau alternatif 12 en une tension alternative de sortie délivrée à la machine électrique 14.

Le système de conversion 16 comprend un premier transformateur électrique 18 relié au réseau alternatif 12, le premier transformateur 18 comportant un premier enroulement primaire 20, deux premiers enroulements secondaires 22A, 22B, et un premier noyau magnétique, non représenté.

Le système de conversion 16 comprend également deux convertisseurs électriques 24A, 24B, chacun étant connecté à un premier enroulement secondaire 22A, 22B respectif.

Le système de conversion 16 comprend en outre un deuxième transformateur électrique 26 et un dispositif électrique auxiliaire 28, le deuxième transformateur 26 comportant un deuxième enroulement primaire 30, deux deuxièmes enroulements secondaires 32A, 32B, et un deuxième noyau magnétique, non représenté. Chaque deuxième enroulement secondaire 32A, 32B est connecté à un premier enroulement secondaire 22A, 22B respectif, et le dispositif auxiliaire 28 est connecté au deuxième enroulement primaire 30.

Chaque enroulement 20, 22A, 22B du premier transformateur 18 comporte, pour la ou chaque phase, un bobinage, non représenté, enroulé autour du premier noyau magnétique. Autrement dit, dans l'exemple de réalisation de la figure 1, chaque enroulement 20, 22A, 22B du premier transformateur électrique 18 comporte trois bobinages distincts.

De manière analogue, chaque enroulement 30, 32A, 32B du deuxième transformateur 26 comporte, pour la ou chaque phase, un bobinage, non représenté, enroulé autour du deuxième noyau magnétique. Dans l'exemple de réalisation de la figure 1, chaque enroulement 30, 32A, 32B du deuxième transformateur 26 comporte alors trois bobinages distincts.

Le nombre d'enroulements secondaires 22A, 22B, 32A, 32B des premier 18 et deuxième 26 transformateurs électriques est égal à 2. Autrement dit, chaque transformateur électrique 18, 26 ne comporte pas de troisième enroulement secondaire, contrairement au transformateur électrique du système de conversion de l'état de la technique.

Dans l'exemple de réalisation de la figure 1, chaque convertisseur 24A, 24B est un convertisseur commuté par la charge, également appelé convertisseur LCI (de l'anglais *Load Commutated Inverter).* Chaque convertisseur commuté par la charge 24A, 24B comporte un redresseur de tension 34A, 34B et un onduleur de tension 36A, 36B connecté en sortie du redresseur de tension 34A, 34B via un bus continu 38A, 38B, le bus continu 38A, 38B comportant une bobine électromagnétique 40A, 40B.

Les convertisseurs 24A, 24B sont de préférence identiques. Les convertisseurs 24A, 24B présentent une puissance électrique de préférence supérieure à 1 MW, de préférence encore supérieure à 10 MW.

Dans l'exemple de réalisation de la figure 1, le dispositif auxiliaire 28 comporte un filtre 42 de réduction des harmoniques de courant susceptibles d'être réinjectées sur le réseau alternatif 12.

Chaque redresseur de tension 34A, 34B et chaque onduleur de tension 36A, 36B sont connus en soi. Dans l'exemple de réalisation de la figure 1, les redresseurs de tension 34A, 34B et les onduleurs de tension 36A, 36B comportent chacun un pont de thyristors 44. Les redresseurs de tension 34A, 34B et les onduleurs de tension 36A, 36B représentés sur la figure 1 sont des convertisseurs à six impulsions (de l'anglais *LCI six puiselsix pulse).*

Le bus continu 38A d'un convertisseur est connecté au bus continu 38B de l'autre convertisseur, afin d'obtenir un redresseur de tension et un onduleur de tension équivalents à un redresseur 12 d'impulsions, respectivement à un onduleur 12 d'impulsions.

Le filtre de réduction 42 comporte, pour la ou chaque phase du réseau alternatif 12, une branche de filtrage 46 comportant une bobine électromagnétique de filtrage 48 et un condensateur de filtrage 50 connecté en série de la bobine de filtrage 48. En complément, le filtre de réduction 42 comporte une résistance d'amortissement 51 connectée en parallèle de chaque bobine de filtrage 48.

Dans l'exemple de réalisation de la figure 1, les trois branches de filtrage 46 sont connectées en étoile, et les trois condensateurs 50 des trois branches sont reliés entre eux par un point commun 52. En variante non représentée, les branches de filtrage 46 sont connectées en triangle, chaque branche de filtrage 46 étant connecté entre deux phases respectives.

Le système de conversion 16 selon l'invention permet ainsi de connecter le dispositif auxiliaire 28 en entrée des convertisseurs 24A, 24B sans avoir besoin de prévoir un troisième enroulement secondaire pour le premier transformateur électrique 18 connecté au réseau alternatif 12. Ceci permet alors une réduction des coûts de l'ordre de 30%, bien qu'un deuxième transformateur électrique 26 à deux enroulements secondaires 32A, 32B soit nécessaire.

En effet, lorsqu'un troisième enroulement secondaire est ajouté au premier transformateur 18, le troisième enroulement secondaire doit être fortement couplé magnétiquement aux deux autres enroulements secondaires, et de manière équivalent entre les enroulements secondaires, tandis qu'il doit être faiblement couplé magnétiquement à l'enroulement primaire du premier transformateur 18, afin que le dispositif auxiliaire 28 ne soit pas perturbé par le réseau 12. L'ajout d'un troisième enroulement secondaire au premier transformateur 18 engendre donc d'importants surcoûts.

En outre, avec le système de conversion de l'état de la technique, les enroulements secondaires du premier transformateur sont parcourus par les harmoniques de courant, notamment par les cinquième et septième harmoniques, et sont soumis à un facteur de puissance de faible valeur. Il est alors nécessaire de dimensionner les enroulements secondaires du premier transformateur en fonction de ces contraintes, ce qui engendre également des surcoûts.

Dans l'exemple de réalisation, le filtre de réduction 42 est faiblement couplé magnétiquement au premier enroulement primaire 20, afin de ne pas filtrer le réseau 12, mais seulement les harmoniques de courant susceptibles d'être réinjectées sur ce réseau 12. Ce faible couplage magnétique est obtenu par la présence du deuxième transformateur 26, le filtre de réduction 42 étant connecté à l'enroulement primaire 30 de ce deuxième transformateur 26.

Le filtre 42 connecté à l'enroulement primaire 30 du deuxième transformateur électrique 26 permet alors de réduire les harmoniques de courant, notamment les onzième et treizième harmoniques, et également de corriger le facteur de puissance du système de conversion 16 de par la présence des condensateurs 50.

Le premier transformateur électrique 18 avec seulement deux enroulements secondaires 22A, 22B permet également d'améliorer le facteur de puissance du système de conversion 16 par rapport au système de conversion de l'état de la technique dont le transformateur électrique comporte trois enroulements secondaires.

Le fonctionnement des convertisseurs 24A, 24B, tels que des convertisseurs LCI, est connu en soi, et n'est pas décrit davantage.

On conçoit ainsi que le système de conversion 16 selon l'invention permet de réduire les coûts de fabrication, notamment ceux associés aux transformateurs électriques 18, 26, tout en offrant de bonnes performances électriques.

## Revendications

1. Système (16) de conversion d'énergie électrique comprenant :
- un premier transformateur électrique (18) propre à être relié à un réseau électrique alternatif (12), le premier transformateur (18) comportant un premier enroulement primaire (20) et deux premiers enroulements secondaires (22A, 22B),
- deux convertisseurs électriques (24A, 24B), chacun étant connecté à un premier enroulement secondaire (22A, 22B) respectif,
**caractérisé en ce que** le système (16) comprend en outre un deuxième transformateur électrique (26) et un dispositif électrique auxiliaire (28), le deuxième transformateur (26) comportant un deuxième enroulement primaire (30) et deux deuxièmes enroulements secondaires (32A, 32B), chaque deuxième enroulement secondaire (32A, 32B) étant connecté à un premier enroulement secondaire (22A, 22B) respectif, et le dispositif auxiliaire (28) étant connecté au deuxième enroulement primaire (30).

2. Système (16) selon la revendication 1, dans lequel le nombre d'enroulements secondaires (22A, 22B, 32A, 32B) des premier (18) et deuxième (26) transformateurs électriques est égal à 2.

3. Système (16) selon la revendication 1 ou 2, dans lequel le dispositif auxiliaire (28) comporte un filtre (42) de réduction d'harmonique(s) de courant susceptibles d'être réinjectée(s) sur le réseau alternatif (12).

4. Système (16) selon la revendication 3, dans lequel le réseau alternatif (12) présente au moins une phase, et le filtre de réduction (42) comporte, pour la ou chaque phase, une bobine électromagnétique (48) connectée en série avec un condensateur (50).

5. Système (16) selon l'une quelconque des revendications précédentes, dans lequel chaque convertisseur (24A, 24B) est un convertisseur commuté par la charge.

6. Système (16) selon la revendication 5, dans lequel chaque convertisseur commuté par la charge (24A, 24B) comporte un redresseur de tension (34A, 34B) et un onduleur de tension (36A, 36B) connecté en sortie du redresseur de tension (34A, 34B) via un bus continu (38A, 38B), le bus continu comportant une bobine électromagnétique (40A, 40B).

7. Système (16) selon la revendication 6, dans lequel le redresseur de tension (34A, 34B) et l'onduleur de tension (36A, 36B) comportent chacun un pont de thyristors (44).

8. Chaîne d'entraînement (10), comprenant une machine électrique (14) alimentée par un réseau électrique alternatif (12) via un système de conversion d'énergie électrique (16), le système de conversion (16) étant connecté entre le réseau alternatif (12) et la machine électrique (14),
**caractérisée en ce que** le système de conversion d'énergie électrique (16) est conforme à l'une quelconque des revendications précédentes.

## Patentansprüche

1. System (16) zur Umwandlung von elektrischer Energie aufweisend:
- einen ersten elektrischen Transformator (18), der dazu eingerichtet ist, mit einem Wechselspannungsnetz (12) verbunden zu werden, wobei der erste Transformator (18) eine erste Primärwicklung (20) und zwei erste Sekundärwicklungen (22A, 22B) aufweist,
- zwei elektrische Wandler (24A, 24B), von denen jeder mit jeweils einer ersten Sekundärwicklung (22A, 22B) verbunden ist,
**dadurch gekennzeichnet, dass** das System (16) außerdem einen zweiten elektrischen Transformator (26) und eine zusätzliche elektrische Einrichtung (28) aufweist, wobei der zweite Transformator (26) eine zweite Primärwicklung (30) und zwei zweite Sekundärwicklungen (32A, 32B) aufweist, wobei jede zweite Sekundärwicklung (32A, 32B) mit jeweils einer ersten Sekundärwicklung (22A, 22B) verbunden ist, und die zusätzliche Einrichtung (28) mit der zweiten Primärwicklung (30) verbunden ist.

2. System (16) nach Anspruch 1, bei dem die Anzahl von Sekundärwicklungen (22A, 22B, 32A, 32B) des ersten (18) und zweiten (26) elektrischen Transformators gleich 2 ist.

3. System (16) nach Anspruch 1 oder 2, bei dem die zusätzliche Einrichtung (28) einen Filter (42) zur Reduktion einer Harmonischen oder mehrerer Harmonischer des Stromes, der dazu eingerichtet ist bzw. die dazu eingerichtet sind, wieder in das Wechselspannungsnetz (12) eingespeist zu werden.

4. System (16) nach Anspruch 3, bei dem das Wechselspannungsnetz (12) wenigstens eine Phase bereitstellt und der Filter zur Reduktion (42) für die oder jede Phase eine elektromagnetische Spule (48) aufweist, die in Reihe mit einem Kondensator (50) geschaltet ist.

5. System (16) nach irgendeinem der vorhergehenden Ansprüche, bei dem jeder Wandler (24A, 24B) ein durch die Last geschalteter Wandler ist.

6. System (16) nach Anspruch 5, bei dem jeder durch die Last geschalteter Wandler (24A, 24B) einen Spannungsgleichrichter (34A, 34B) und einen Spannungswechselrichter (36A, 36B) aufweist, der mittels eines Gleichstromkreises (38A, 38B) an den Ausgang des Spannungsgleichrichters (34A, 34B) angeschlossen ist, wobei der Gleichstromkreis eine elektromagnetische Spule (40A, 40B) aufweist.

7. System (16) nach Anspruch 6, wobei der Spannungsgleichrichter (34A, 34B) und der Spannungswechselrichter (36A, 36B) jeweils eine Brücke aus Thyristoren (44) aufweist.

8. Antriebsstrang (10) aufweisend eine elektrische Maschine (14), mittels eines Systems zur Wandlung elektrischer Energie (16) die von einem elektrischen Wechselspannungsnetz (12) gespeist ist, wobei das System (16) zur Wandlung zwischen das Wechselspannungsnetz (12) und die elektrische Maschine (14) geschaltet ist, **dadurch gekennzeichnet, dass** das System zur Wandlung von elektrischer Energie (16) irgendeinem der vorhergehenden Ansprüche entspricht.

## Claims

1. System (16) for converting electrical energy, comprising:
- a first electrical transformer (18) able to be connected to an alternating electrical network (12), the first transformer (18) comprising a first primary winding (20) and two first secondary windings (22A, 22B),
- two electrical converters (24A, 24B), each being connected to a first secondary winding (22A, 22B) respectively,
**characterized in that** the system (16) also comprises a second electrical transformer (26) and an auxiliary electrical device (28), the second transformer (26) comprising a second primary winding (30) and two second secondary windings (32A, 32B), each second secondary winding (32A, 32B) being connected to a first secondary winding (22A, 22B) respectively, and the auxiliary device (28) being connected to the second primary winding (30).

2. System (16) according to claim 1, wherein the number of secondary windings (22A, 22B, 32A, 32B) of the first (18) and second (26) electrical transformers is equal to two.

3. System (16) according to claim 1 or 2, wherein the auxiliary device (28) comprises a filter (42) for reducing current harmonic(s) which are liable to be reinjected into the alternating network (12).

4. System (16) according to claim 3, wherein the alternating network (12) has at least one phase, and the reducing filter (42) comprises, for the or each phase, an electromagnetic coil (48) connected in series to a condenser (50).

5. System (16) according to any of the preceding claims, wherein each converter (24A, 24B) is a load-switched converter.

6. System (16) according to claim 5, wherein each load-switched converter (24A, 24B) comprises a voltage rectifier (34A, 34B) and a voltage inverter (36A, 36B) connected at the output of the voltage rectifier (34A, 34B) via a continuous bus (38A, 38B), the continuous bus comprising an electromagnetic coil (40A, 40B).

7. System (16) according to claim 6, wherein the voltage rectifier (34A, 34B) and the voltage inverter (36A, 36B) each comprise a thyristor bridge (44).

8. Drive train (10) comprising an electric machine (14) powered by an alternating electrical network (12) via an electrical energy conversion system (16), the conversion system (16) being connected between the alternating network (12) and the electrical machine (14), **characterized in that** the electrical energy conversion system (16) is in accordance with any of the preceding claims.
